# FASCICULE DE BREVET EUROPEEN

(11) **EP 3 800 990 B1**
(45) Date de publication et mention de la délivrance du brevet: **02.07.2025**
(21) Numéro de dépôt: 19730694.7
(22) Date de dépôt: 28.05.2019
(51) Int. Cl.: A01G 9/22, A01G 9/24

(54) **ECRAN D'OMBRAGE MOBILE POUR SERRE AGRICOLE**
MOBILE SONNENSCHUTZEINRICHTUNG FÜR LANDWIRTSCHAFTLICHE GEWÄCHSHÄUSER
MOBILE SHADING SCREEN FOR AGRICULTURAL GREENHOUSES

(30) Priorité: 28.05.2018 FR 1854537
(43) Date de publication de la demande: 14.04.2021
(73) Titulaire: Janet, Alain, 06210 Mandelieu-la Napoule (FR); Hicham, Fatnassi, 06200 Nice (FR); Poncet, Christine, 06620 Le Bar sur Loup (FR)
(72) Inventeur: Janet, Alain, 06210 Mandelieu-la Napoule (FR); Hicham, Fatnassi, 06200 Nice (FR); Poncet, Christine, 06620 Le Bar sur Loup (FR)
(74) Mandataire: Hautier IP
(86) Numéro de dépôt international: PCT/EP2019/063807
(87) Numéro de publication internationale: WO 2019/229056

(56) Documents cités:
- EP-A1- 2 020 467
- EP-A2- 1 875 797
- WO-A1-2006/032077
- WO-A1-2008/009916
- WO-A1-2014/014365
- WO-A1-90/15523
- CN-U- 206 728 708
- FR-A1- 3 016 734
- US-A- 4 375 232

## Description

### DOMAINE TECHNIQUE DE L'INVENTION

La présente invention concerne le domaine des serres en général, et plus particulièrement des écrans d'ombrage intérieur pour serre agricole disposant d'un microclimat artificiel.

### ETAT DE LA TECHNIQUE

Les serres de productions agricoles protégées sont en pleine expansion au niveau mondial du fait de leur robustesse aux aléas climatiques. On estime que les surfaces de serre mondiales représentent actuellement entre 3 et 5 millions d'hectares répartis sous tous les climats du globe et avec des typologies d'équipement très variées.

Dans ces cultures protégées, l'excès de luminosité constitue un enjeu majeur dans 95% des cas. En effet les cultures ne sont pas capables d'effectuer leur photosynthèse de manière correcte lorsque le taux de luminosité est supérieur à un certain seuil et que le taux de dioxyde de carbone est inférieur à un certain seuil. Ainsi, à certains niveaux de luminosité, variables selon les espèces, et lorsque le niveau de CO2 n'est pas suffisamment élevé, les plantes subissent un stress important, comme la photo-inhibition par exemple, susceptible d'induire des dégâts importants, comme des brûlures par exemple.

Face à cette problématique, il existe trois solutions proposées selon le niveau technologique de la serre : complémentation CO2 nécessitant de lourdes et coûteuses installations, chaulage impliquant un investissement moindre et enfin l'utilisation d'écrans d'ombrage qui constitue la solution la plus simple et la moins coûteuse.

Les écrans d'ombrage sont généralement constitués d'une toile d'aluminium que l'on déplie, manuellement ou automatiquement, selon le niveau de luminosité dans la serre, autrement dit selon l'intensité lumineuse du rayonnement solaire. On peut citer la demande de brevet américain US4375232 qui divulgue un isolant pour serre et la demande internationale WO9015523 qui divulgue un store solaire pour serre.

Un deuxième enjeu existe relativement aux serres, et celui-ci concerne l'énergie. En effet, une serre consomme de l'énergie (notamment pour réguler sa température) et, en même temps, est généralement située en des lieux exposés au soleil. Ainsi, il existe désormais des serres dites photovoltaïques, car comprenant des panneaux photovoltaïques disposés à sa surface. On peut citer la demande de brevet chinois CN 206728708 qui divulgue une serre solaire photovoltaïque.

Ainsi, les serres photovoltaïques se développent depuis une dizaine d'années. Les serres photovoltaïques proposées par les industriels sont donc constituées de panneaux photovoltaïques en verre installés de façon fixe sur les structures de toit. Les cellules photovoltaïques de ces panneaux étant opaques, les panneaux photovoltaïques sont, soit totalement opaques, soit présentent des espaces intercellulaires laissés transparents aux rayons du soleil.

Un des problèmes majeurs de ces serres photovoltaïques est qu'elles induisent une perte de luminosité continue à l'intérieur de la serre photovoltaïque. Et cette perte est directement liée à la densité de panneaux positionnés sur la toiture. Si l'été certaines cultures sont parfois possibles, dans la plupart des cas, l'équilibre entre production électrique et production végétale n'est pas assuré et beaucoup de ces réalisations ne présentent soit qu'une production énergétique faible, soit qu'une production agricole faible, voire nulle.
EP 2 020 467 A1, WO 2008/009916 A1, WO 2006/032077 A1, FR 3 016 734 A1 et EP 1 875 797 A2 illustrent différentes solutions techniques dans le domaine des panneaux photovoltaïques.

La présente invention vise à résoudre au moins en partie les problématiques exposées ci-dessus.

### RESUME DE L'INVENTION

Pour résoudre au moins en partie ces problématiques, l'invention, selon un mode de réalisation, porte sur un écran d'ombrage mobile selon la revendication 1.

De manière astucieuse et optionnelle, et selon un mode de réalisation, une partie au moins de la pluralité de films transparents ou semi-transparents et de films photovoltaïques alternés (effet de lumière tamisée et striée propice à la croissance des plantes) comprend au moins une grille drainante. Cette grille drainante est de préférence souple. Elle permet, en configuration déployée de laisser circuler les divers éléments en suspension dans l'atmosphère de la serre agricole et de servir de drain pour une partie de l'humidité se condensant sur les surfaces de l'écran d'ombrage, et en configuration repliée de servir de drain pour évacuer l'humidité condensée et chargée en biotopes sur la surface de la pluralité de films photovoltaïques.

Selon un mode de réalisation, une partie au moins de la pluralité de films photovoltaïques comprend au moins une grille drainante souple permettant, en configuration déployée de laisser circuler les divers éléments en suspension dans l'atmosphère de la serre agricole et de servir de drain pour une partie de l'humidité se condensant sur les surfaces de l'écran d'ombrage, et en configuration repliée de servir de drain pour évacuer l'humidité condensée et chargée en biotopes sur la surface de la pluralité de films photovoltaïques.

De préférence, mais de manière non limitative, la pluralité de films transparents présente une souplesse plus grande que la souplesse que présente la pluralité de films photovoltaïques.

Selon un mode de réalisation, l'écran coopère avec un support appartenant ou non à la serre agricole, afin de passer alternativement de la configuration déployée à la configuration repliée.

De manière astucieuse, ce support peut comprendre un élément de nettoyage mécanique des surfaces de la pluralité de films photovoltaïques, telle une brosse par exemple.

Selon un mode de réalisation préféré, mais non limitatif, l'écran forme une alternance de films photovoltaïques et de films transparents ou semi-transparents et de films photovoltaïques alternés. Selon un exemple de réalisation, l'écran, au moins en configuration déployée, s'étend selon une surface d'extension principale. Si l'écran s'étend principalement dans un plan, alors ce plan présente une alternance de films photovoltaïques de films transparents. L'écran n'est pas nécessairement plan en configuration déployée. Il peut s'étendre selon une surface courbe en configuration déployée.

La présente invention permet de disposer d'un écran d'ombrage photovoltaïque permettant à la fois la récupération d'énergie et la génération de zones d'ombrage tout en présentant la souplesse d'un écran d'ombrage classique. Cet écran d'ombrage mobile permet de plus une protection du microclimat de la serre agricole en régulant de manière astucieuse l'ensoleillement des plantes se trouvant en dessous de lui.

De manière astucieuse, le pilotage de l'écran d'ombrage mobile peut être dépendant d'une pluralité de facteurs tels que la mesure d'un taux d'humidité, d'une température, d'un taux d'ensoleillement, d'un calendrier, d'un horaire ou de toutes autres sources d'informations utiles à la gestion et à la préservation du microclimat de la serre agricole.

Ainsi, la présente invention permet la collecte d'énergie solaire, la réduction de la luminosité au niveau d'une partie de la culture d'une serre agricole et l'utilisation de systèmes mécaniques de déploiement/repliement déjà en place dans les serres agricoles pour des écrans d'ombrage classiques comme par exemple en aluminium.

Du fait de sa souplesse, l'écran d'ombrage photovoltaïque selon la présente invention peut être utilisé comme un vrai écran d'ombrage classiquement utilisé sur de nombreuses surfaces de serre agricole de par le monde. La pluralité de films photovoltaïques de cet écran d'ombrage mobile ne requiert aucune orientation, aucune inclinaison, aucune angulation spécifiques pour fonctionner, car à la différence des panneaux photovoltaïques classiques relativement épais, la pluralité de films photovoltaïques comprend des films à couches minces qui sont moins sensibles à l'incidence de la lumière car ils sont plus facilement traversés par les rayons du soleil.

De manière astucieuse, l'écran selon l'invention peut se positionner horizontalement sous ou sur la toiture de la serre agricole, c'est-à-dire par exemple suspendu, et/ou verticalement contre les parois latérales de la serre agricole ou entre deux parties de la serre agricole. Cette disposition verticale est avantageuse pour des cultures présentant une très forte sensibilité à la lumière.

De manière préférée, l'écran selon l'invention est configuré pour se positionner horizontalement sous la toiture de la serre agricole, c'est-à-dire par exemple suspendu selon une dimension d'extension principale s'étendant dans un plan sensiblement horizontal.

La zone photovoltaïque de l'écran d'ombrage crée par définition une surface physique utilisable pour protéger les cultures contre les excès de luminosité. Cette zone est également impactée par les particules en suspension ainsi que la forte humidité du microclimat de la serre agricole. Néanmoins, via l'utilisation de grilles de drainages souples entre chaque zone photovoltaïque, la lumière peut circuler et l'humidité peut s'écouler.

De manière avantageuse, l'écran d'ombrage selon la présente invention est enroulable/déroulable, pliable/dépliable à l'image d'un écran d'ombrage classique et permet ainsi de produire de l'électricité aux moments les plus favorables de la journée tout en protégeant les cultures et d'être rangé, voire stocké, très simplement tout en présentant un très faible encombrement.

L'énergie collectée par l'écran peut par exemple servir à alimenter un dispositif de régulation de la température de la serre agricole, à alimenter un dispositif d'irrigation comprenant par exemple une pompe, alimenter un dispositif d'éclairage des cultures.

L'écran d'ombrage selon la présente invention présente en outre de nombreux autres avantages dont :
- une végétation plus vigoureuse et une augmentation des rendements agricoles de l'ordre de 20% ;
- une économie d'énergie suite à une moindre utilisation des systèmes de climatisation ;
- Déployé la nuit, il sert à conserver la chaleur dans la partie de la serre agricole se trouvant sous l'écran d'ombrage mobile déployé, cela afin de protéger les cultures d'une baisse trop importante de la température, tout en réduisant la production de chaleur par des systèmes tiers ;
- une production en énergie renouvelable d'environs 120W /m2 STC ;
- une économie d'espace dans les zones à forte compétition pour le foncier comme les zones urbaines et péri-urbaines.

La présente invention permet la protection du microclimat de la serre agricole contre par exemple le stress oxydatif, la saturation de la photosynthèse et de la photo-inhibition.

La présente invention permet de contrôler de manière optimale le rayonnement solaire parvenant au niveau des plantes dans une serre agricole et ainsi d'éviter les problèmes d'excès ou de manque de luminosité pour l'activité photosynthétique de la culture. Parallèlement, l'invention permet de générer une production d'électricité utile pour la serre agricole elle-même (moteurs d'ouvrants, irrigation, systèmes de refroidissements par exemple) ou ses équipements alentours (chambres froides par exemple). La présente invention est la seule solution technique qui permet aujourd'hui un partage judicieux des photons entre production agricole et production électrique sous serre agricole et qui permet même une synergie entre les deux systèmes de production. En effet, la présente invention permet de limiter de façon significative le stress de la plante alors que les autres solutions connues génèrent, de façon significative, des stress supplémentaires pour la plante.

La présente invention concerne aussi un système d'ombrage, destiné à être disposé à l'intérieur d'une serre agricole, comprenant au moins un écran d'ombrage selon la présente invention, au moins un support configuré pour coopérer avec ledit écran d'ombrage et au moins un dispositif d'actionnement configuré pour faire passer alternativement l'écran d'ombrage de la configuration déployée à la configuration repliée.

Selon un exemple de réalisation, le dispositif d'actionnement est motorisé et le système comprend au moins un dispositif de pilotage du dispositif d'actionnement.

De manière avantageuse, l'écran d'ombrage mobile est libre de toutes barres transversales, de tout rail. L'écran d'ombrage mobile est sensiblement horizontal, voire à plat, lorsqu'il est déployé. Il est de préférence tenu à au moins un câble. Il ne nécessite aucune surface porteuse, gonflée ou non, de type convexe ou concave, il ne nécessite pas l'utilisation d'un film prismatique car il travaille essentiellement de façon horizontale.

La présente invention concerne également une serre agricole comprenant au moins un système d'ombrage selon la présente invention.

Selon un exemple, la serre agricole comprend une toiture et l'écran d'ombrage est disposé sous la toiture et à distance de la toiture. Ainsi, l'écran d'ombrage est distinct de la toiture. L'écran d'ombrage ne forme pas une partie de l'enveloppe externe de la serre. L'enveloppe externe de la serre est formée notamment par la toiture et par d'éventuelles parois latérales s'étendant principalement verticalement. Ainsi, les deux faces principales de l'écran d'ombrage, c'est-à-dire la face interne tournée au regard des cultures et la face externe, opposée à la face interne, sont situées sous une face interne de la toiture. La face interne de la toiture et la face externe de l'écran d'ombrage sont séparées par un espace.
Selon un exemple, le dispositif d'actionnement configuré pour faire passer alternativement l'écran d'ombrage de la configuration déployée à la configuration repliée est également disposé sous la toiture.
Selon un exemple, la serre agricole forme une enveloppe fermée à l'intérieur de laquelle règne une atmosphère présentant un taux d'humidité supérieur à 90%, de préférence à 92% et avantageusement supérieur ou égal à 95%.
Selon un exemple, la serre agricole forme une enveloppe qui délimite un volume interne. Le volume interne de la serre agricole situé au-dessus de l'écran d'ombrage, c'est-à-dire entre l'écran en configuration déployée et la toiture est supérieur ou égal au volume de la serre agricole situé en dessous de l'écran d'ombrage en configuration déployée.

Enfin la présente invention concerne un procédé de pilotage du déploiement et/ou du repliement d'un système d'ombrage selon la présente invention, le système étant destiné à être disposé à l'intérieur d'une serre agricole et comprenant au moins un dispositif de pilotage du dispositif d'actionnement, le procédé comprenant au moins le cycle d'étapes suivantes:
- Détermination d'un paramètre de pilotage du dispositif d'actionnement par le dispositif de pilotage, ledit paramètre de pilotage peut être avantageusement fonction de relevés de radiations, via par exemple un pyranomètre, et de température, traités par un module de gestion électronique et un logiciel de gestion de diverses données radiations/température/productivité ;
- Modification de la configuration de l'écran d'ombrage par le dispositif d'actionnement piloté par le dispositif de pilotage en fonction du paramètre de pilotage.

De manière avantageuse, le paramètre de pilotage peut être pris parmi au moins : une donnée temporelle, une donnée météorologique, une température, un niveau d'humidité, un niveau de luminosité, une configuration de l'écran d'ombrage, une instruction de pilotage.

En particulier, la gestion de l'écran d'ombrage mobile peut être automatisée et pilotée par un module de gestion électronique recueillant une pluralité de données issues d'une pluralité de capteurs, cela afin de protéger au mieux et de réguler le microclimat de la serre agricole via le pilotage de l'écran d'ombrage mobile. Ces capteurs peuvent par exemple être pris parmi au moins : un pyranomètre, un thermomètre, un hygromètre, un anémomètre, un pluviomètre, un dendromètre permettant la mesure instantanée de la croissance du végétal.

Ces capteurs sont de préférence couplés à un système de transmission des données dans la serre agricole, via tout type de technologies de communications filaires et/ou sans fils.

L'ensemble de ces données permettent la détermination de paramètres de pilotage de l'écran d'ombrage mobile.

### BRÈVE DESCRIPTION DES FIGURES

Les buts, objets, ainsi que les caractéristiques et avantages de l'invention ressortiront mieux de la description détaillée d'un mode de réalisation de cette dernière qui est illustré par les dessins d'accompagnement suivants dans lesquels :
- La figure 1a illustre un écran d'ombrage selon un mode de réalisation de la présente invention en configuration déployée.
- La figure 1b illustre un écran d'ombrage selon un autre mode de réalisation de la présente invention en configuration déployée.
- La figure 2a illustre un écran d'ombrage selon un mode de réalisation de la présente invention en configuration semi-déployée, cet écran d'ombrage étant monté sur un cadre rigide.
- La figure 2b illustre un écran d'ombrage selon un mode de réalisation de la présente invention, enroulé en partie sur lui-même et monté sur un cadre rigide.
- La figure 3 illustre une vue schématique d'une serre agricole comprenant un écran d'ombrage selon un mode de réalisation de la présente invention et un dispositif d'actionnement permettant de passer sélectivement de la configuration déployée à la configuration repliée.
- La figure 4 illustre une vue schématique d'un écran d'ombrage en configuration repliée et comportant un dispositif drainant selon un mode de réalisation optionnel.

Les dessins joints sont donnés à titre d'exemples et ne sont pas limitatifs de l'invention. Ces dessins sont des représentations schématiques et ne sont pas nécessairement à l'échelle de l'application pratique.

### DESCRIPTION DÉTAILLÉE DE L'INVENTION

Dans le cadre de la présente invention, un écran d'ombrage ou un film sont dits « souples » ou « flexibles » lorsqu'ils sont formés d'un film ou de plusieurs films juxtaposées, par exemple de manière contigüe, qui peuvent être enroulés sur eux-mêmes et/ou qui se déforment sous l'action de leur propre poids et/ou être repliés sous l'effet d'une force exercée par au moins la ou les deux mains d'un utilisateur.

De préférence, un écran ou un film ou une pluralité de films sont dit souples lorsqu'ils peuvent être enroulés et/ou déroulés autour d'un axe dont le diamètre est inférieur ou égale à 30 cm, de préférence à 20 cm et avantageusement à 10 cm, le diamètre considéré étant le diamètre externe de l'axe autour duquel l'écran est enroulé.

De préférence, un écran ou un film ou une pluralité de films sont dit souples lorsqu'ils peuvent être enroulés sur eux-mêmes de sorte à présenter un rayon de courbure inférieur ou égal à 50 cm, inférieur ou égal à 25 cm, de préférence à 15 cm et avantageusement à 5 cm, le rayon de courbure mesuré correspondant au diamètre interne du tube formé par l'enroulement.

De préférence, l'écran d'ombrage est formé d'un film ou d'une pluralité de films souples qui ne se maintiennent pas d'eux-mêmes, c'est-à-dire qu'ils s'affaissent, lorsqu'ils sont disposés à l'horizontal et sont tenus uniquement par l'une de leurs extrémités.

De préférence la largeur du film ou de la pluralité des films est supérieure ou égale à 5 cm, de préférence à 40 cm, sa longueur est supérieure ou égale à 20 cm, de préférence à 40cm et avantageusement à 80cm et son épaisseur est inférieure ou égale à 1mm, de préférence à 500µm, et avantageusement à 200µm.

Dans le cadre de la présente invention, on entend par « élément transparent » un élément dont la matière présente un coefficient de transmittance du spectre visible ≥ 80%. De préférence, pour un rayonnement solaire incident, parvenant sur un élément transparent avec un angle compris entre 0 et 90 degrés par rapport à la normale à la surface dudit élément, au moins Y% du rayonnement parvenant sur cet élément transparent traverse ledit élément transparent, Y étant ≥ 20, de préférence Y ≥ 50, avantageusement ≥ 80.

Avant d'entamer une revue détaillée de modes de réalisation de l'invention, sont énoncées ci-après des caractéristiques optionnelles qui peuvent éventuellement être utilisées en association ou alternativement :
- Avantageusement, en configuration repliée, l'écran d'ombrage est configuré pour être enroulé sur lui-même selon un diamètre inférieur ou égal à 30 cm, de préférence à 20 cm et avantageusement à 10 cm, le diamètre mesuré correspondant au diamètre interne du tube formé par l'écran d'ombrage enroulé sur lui-même.
   Cela permet d'enrouler l'écran d'ombrage pour un stockage simple en utilisant les systèmes connus de stockage d'écrans d'ombrage.
- Avantageusement, en configuration repliée, l'écran d'ombrage est configuré pour présenter un rayon de courbure inférieur ou égal à 25 cm, de préférence à 15 cm et avantageusement à 5 cm.
   Cela permet d'enrouler l'écran d'ombrage pour un stockage simple et utilisant les systèmes connus de stockage d'écrans d'ombrage.
- Avantageusement, l'écran d'ombrage comprend des films émetteurs de lumière comme par exemple des films comprenant au moins une diode électroluminescente organique. Cela permet par exemple de générer de la lumière selon certaines longueurs d'ondes, comme dans la gamme des ultraviolets par exemple ou encore infrarouge, afin d'apporter à une partie au moins d'une culture d'une serre agricole, le rayonnement lumineux nécessaire à son développement par exemple.
- Avantageusement, l'écran d'ombrage comprend des films émetteurs de chaleur autrement appelés films thermiques.
   Cela permet d'augmenter la température au niveau d'une partie d'une culture dans une serre agricole sans pour autant augmenter son exposition aux rayons du soleil.
- Avantageusement, le rapport entre le rayon de courbure de l'écran d'ombrage en configuration déployée et le rayon de courbure de l'écran d'ombrage en configuration repliée est supérieur à 5, de préférence à 20, et avantageusement à 100.
- Avantageusement, le rapport entre la première surface d'ombrage et la deuxième surface d'ombrage est supérieur à 5, de préférence à 20, et avantageusement à 100.
- Avantageusement, l'écran d'ombrage comprend une extrémité libre et une extrémité fixe, opposée à l'extrémité libre, l'extrémité fixe étant solidaire d'une partie d'une serre agricole, et le rapport entre la distance entre l'extrémité libre et l'extrémité fixe en configuration déployée et la distance entre l'extrémité libre et l'extrémité fixe en configuration repliée est supérieur à 5, de préférence à 20, et avantageusement à 100.
- Avantageusement, l'écran d'ombrage comprend une extrémité libre et une extrémité fixe, opposée à l'extrémité libre, l'extrémité fixe étant solidaire d'une partie d'une serre agricole, et, en configuration repliée, la distance entre l'extrémité libre et l'extrémité fixe est inférieure à 20cm, de préférence à 10cm, et avantageusement à 5cm, et, en configuration déployée, la distance entre l'extrémité libre et l'extrémité fixe est supérieure à 50cm, de préférence à 100cm, et avantageusement à 200cm.
- Avantageusement, l'écran d'ombrage s'étend, en configuration déployée, selon une direction principale d'extension et les films photovoltaïques de la pluralité de films photovoltaïques sont conformés en bandes de films photovoltaïques présentant une première largeur, et les films transparents de la pluralité de films transparents sont conformés en bandes de films transparents présentant une deuxième largeur, les bandes de films photovoltaïques et les bandes de films transparents étant disposées selon la première et la deuxième largeur en alternance les unes relativement aux autres et selon la direction principale d'extension.
   Une disposition en alternance de bandes transparentes et photovoltaïques permet une répartition spatio-temporelle plus homogène de la lumière au niveau de la culture ce qui limite les phénomènes de photo-inhibition comme les phénomènes de déficit de luminosité.
- Avantageusement, l'alternance des bandes de films photovoltaïques et des bandes de films transparents est agencée de sorte à ce que la largeur de deux bandes de films photovoltaïques situées de part et d'autre d'une bande de films transparents soient différentes l'une de l'autre et/ou que la largeur de deux bandes de films transparents situées de part et d'autre d'une bande de films photovoltaïques soient différentes l'une de l'autre.
   Cela permet une répartition homogène de la lumière et de l'ombrage au niveau de la culture d'une serre.
- Avantageusement, les bandes de films photovoltaïques présentent une largeur comprise entre 2 cm et 50 cm, de préférence entre 2.5 cm et 45 cm, et les bandes de films transparents présentent une largeur comprise entre 2 cm et 50 cm, de préférence entre 2.5 cm et 45 cm.
- Avantageusement, l'écran d'ombrage présente une largeur selon une direction secondaire d'extension orthogonale à la direction principale d'extension et les bandes de films photovoltaïques présentent une première longueur s'étendant selon la direction secondaire, et les bandes de films transparents présentent une deuxième longueur s'étendant selon la direction secondaire, la deuxième longueur étant égale à la première longueur.
- Cela permet une répartition homogène de la lumière et de l'ombrage au niveau de la culture d'une serre agricole.
- Avantageusement, l'écran d'ombrage présente, en configuration déployée, une surface d'extension principale.
- Avantageusement, le pourcentage de la surface d'extension principale occupé par la pluralité de films photovoltaïques est compris entre 30% et 90%, de préférence entre 40% et 80% et avantageusement entre 50% et 70%, et le pourcentage de la surface d'extension principale occupé par la pluralité de films transparents est compris entre 10% et 70%, de préférence entre 20% et 60% et avantageusement entre 30% et 50%. Cela permet de générer un ombrage adapté en fonction des différentes cultures considérées.
- Avantageusement, chaque film photovoltaïque de la pluralité de films photovoltaïques présente une épaisseur comprise entre 1nm et 250µm, de préférence entre 5µm et 150µm et avantageusement entre 10µm et 100µm.
   Cela permet de disposer d'un écran d'ombrage souple.
- Avantageusement, la pluralité de films photovoltaïques comprend au moins un type de cellules photovoltaïques pris parmi : organique, de préférence imprimable, à pigment photosensible, à base de Silicium amorphe, à base de cuivre, d'indium, de gallium et de sélénium, à base d'arséniure de gallium, à base de tellure de cadmium, à base de pérovskite.
   Cela permet de réaliser des films photovoltaïques d'une souplesse permettant l'enroulement et le dépliement de l'écran d'ombrage.
- Avantageusement, la pluralité de films photovoltaïques comprend au moins une encapsulation par au moins un film d'encapsulation, de préférence transparent relativement au rayonnement solaire, sur un substrat conducteur électrique, de préférence métallique.
   Cela permet de protéger les cellules photovoltaïques, par exemple, de l'humidité à l'intérieur d'une serre agricole.
- Avantageusement, le film d'encapsulation est pris parmi : un film thermoplastique, un film polymère, un film comprenant de l'éthylène-acétate de vinyle.
- Avantageusement, chaque film photovoltaïque de la pluralité de films photovoltaïques présente une masse surfacique comprise entre 100 g/m² et 600 g/m², de préférence entre 150 g/m² et 550 g/m² et avantageusement entre 200 g/m² et 500 g/m².
   Cela permet de disposer d'un écran d'ombrage présentant un poids sensiblement identique de celui des écrans d'ombrage classique.
- Avantageusement, la pluralité de films photovoltaïques et la pluralité de films transparents sont réparties de sorte à former un damier.
   Cela permet une répartition homogène de la lumière et de l'ombrage au niveau de la culture d'une serre agricole.
- Avantageusement, en configuration déployée, l'écran d'ombrage s'étend principalement selon un plan horizontal, de préférence au-dessus d'au moins une partie d'une culture située dans une serre agricole.
- Avantageusement, le système d'ombrage comprend au moins un cadre configuré pour supporter en partie au moins l'écran d'ombrage de sorte à ce que l'écran d'ombrage, dans la configuration déployée, soit suspendu au-dessus d'au moins une partie d'une culture d'une serre agricole.
- Selon un autre mode de réalisation, en configuration déployée, l'écran d'ombrage s'étend principalement selon un plan vertical.
- Avantageusement, le dispositif d'actionnement comprend au moins un bras articulé configuré pour faire alternativement passer l'écran d'ombrage depuis la configuration déployée vers la configuration repliée et depuis la configuration repliée vers la configuration déployée.
- Avantageusement, le dispositif d'actionnement comprend un moteur comprenant un axe moteur configuré pour faire passer l'écran d'ombrage depuis la configuration déployée vers la configuration repliée en enroulant autour de l'axe moteur l'écran d'ombrage sur lui-même et/ou depuis la configuration repliée vers la configuration déployée en déroulant l'écran d'ombrage autour de l'axe moteur.
- Avantageusement, l'axe moteur présente un diamètre inférieur ou égal à 30 cm, de préférence à 20 cm et avantageusement à 10 cm.
- Avantageusement, le dispositif d'actionnement comprend au moins un câble d'entraînement configuré pour entraîner l'écran d'ombrage en configuration déployée.
- Avantageusement, le dispositif d'actionnement comprend au moins un câble de repliement configuré pour entraîner l'écran d'ombrage en configuration repliée.
- Avantageusement, le système d'ombrage comprend un dispositif de pilotage configuré pour piloter le dispositif d'actionnement et le dispositif de pilotage comprend au moins un capteur pris parmi au moins : un capteur de luminosité, un capteur de température, un capteur d'humidité, un pyranomètre, un anémomètre, un dentomètre, un pluviomètre, un capteur de radiations.
- Avantageusement, le dispositif de pilotage comprend au moins un module de gestion électronique configuré pour déterminer au moins un paramètre de pilotage dudit écran d'ombrage en fonction de données collectées par ledit au moins un capteur.
- Avantageusement, le système d'ombrage comprend au moins un dispositif de nettoyage configuré pour nettoyer au moins une partie de la surface de la pluralité de films photovoltaïques.
- Avantageusement, le dispositif de pilotage comprend au moins un module mémoire, un module électronique, un module d'alimentation électrique, un module d'horloge.
- Selon un mode de réalisation, l'écran d'ombrage comprend la pluralité de films photovoltaïques sur l'ensemble de sa surface d'extension principale.
- Avantageusement, une partie au moins de la pluralité de films transparents comprend au moins un dispositif drainant suffisamment souple pour se déformer sous l'action de son poids.
   Cela permet d'évacuer l'eau et les particules en suspensions dans l'air se déposant à la surface des films photovoltaïques.
- Avantageusement, le dispositif drainant comprend au moins une grille, également qualifiée de grille drainante. La grille drainante peut présenter une configuration de filet. Elle est par exemple faite d'un filet en tissu ou en plastique.
   Cela permet d'évacuer l'eau et les particules en suspensions dans l'air se déposant à la surface des films photovoltaïques.
- Avantageusement, lorsque l'écran d'ombrage est en configuration repliée, une partie au moins de la pluralité de films photovoltaïques s'étend selon une direction verticale de sorte à faire couler, de préférence par gravité, depuis la pluralité de films photovoltaïques vers ledit dispositif drainant l'eau accumulée sur la pluralité de films photovoltaïques.
   Cela permet d'évacuer l'eau et les particules en suspensions dans l'air se déposant à la surface des films photovoltaïques.
- Avantageusement, la pluralité de films photovoltaïques est configurée pour fonctionner dans une atmosphère présentant un taux d'humidité supérieur à 90%, de préférence à 92% et avantageusement supérieur ou égal à 95%.
- Avantageusement, l'écran d'ombrage selon la présente invention est configuré pour être immergé dans l'atmosphère d'une serre agricole de sorte à ce que le volume de l'atmosphère de la serre agricole au-dessus de l'écran d'ombrage en configuration déployée soit supérieur ou égal au volume d'atmosphère de la serre agricole en dessous de l'écran d'ombrage en configuration déployée.
   Cela permet à l'écran d'ombrage de réguler, en partie au moins, le microclimat de la serre agricole.
- Avantageusement, l'écran d'ombrage selon la présente invention présente une première épaisseur en configuration déployée et une deuxième épaisseur en configuration repliée, la première épaisseur étant égale à la deuxième épaisseur, les épaisseurs étant mesurées selon la normale à la surface de la pluralité de films photovoltaïques.
- Avantageusement, l'écran d'ombrage selon la présente invention présente une épaisseur en configuration déployée comprise entre 250µm et 2mm, de préférence entre 350µm et 1mm et avantageusement entre 450µm et 650µm, l'épaisseur étant mesurée selon la normale à la surface de la pluralité de films photovoltaïques.
- Avantageusement, l'écran d'ombrage selon la présente invention comprend au moins une pluralité d'œillets configurés pour coopérer avec ledit support comprenant au moins un câble, de préférence au moins deux câbles de support sur lesquels coulissent lesdits œillets lorsque l'écran d'ombrage passe d'une configuration repliée à une configuration déployée et inversement.
- Avantageusement, le support comprend au moins un câble de support et de préférence au moins deux câbles de support destinés à supporter en partie au moins ledit écran d'ombrage, ledit écran d'ombrage comprenant au moins une pluralité d'œillets configurés pour coopérer avec ledit support.
- Avantageusement, le support comprend au moins un câble, de préférence au moins deux câbles, l'écran d'ombrage comprenant au moins une pluralité d'œillets configurés pour coopérer avec l'au moins un câble, le câble traversant ladite au moins une pluralité d'œillets, l'écran d'ombrage étant configuré de sorte que lesdits œillets de l'au moins une pluralité d'œillets coulissent sur l'au moins un câble lorsque l'écran d'ombrage passe d'une configuration repliée à une configuration déployée et inversement
- Selon un exemple de réalisation, l'écran comprend au moins deux pluralités d'œillets. Chaque pluralité d'œillets comprend des œillets linéairement disposés parallèlement à un axe principal de coulissement de l'écran. Ainsi les au moins deux pluralités sont disposées de manière parallèle. Les œillets de chaque pluralité sont traversés par un même câble. Les câbles sont parallèles entre eux. Les œillets coulissent sur les câbles entraînant sélectivement le déploiement ou le repliement de l'écran.

La présente invention trouve pour domaine préférentiel d'application le domaine des serres agricoles, et en particulier le domaine des écrans d'ombrage disposé à l'intérieur des serres agricoles, de préférence à proximité des cultures.

Il est important de noter que le microclimat d'une serre agricole est un environnement hautement sensible et très humide. L'atmosphère d'une serre agricole est saturée en humidité et en particules en suspension. C'est un environnement très différent de l'environnement extérieur d'une serre agricole. La présente invention est conçue spécifiquement pour être immergé dans ce microclimat, et donc dans cette atmosphère particulière.

La présente invention concerne ainsi un écran d'ombrage photovoltaïque, c'est-à-dire un écran d'ombrage présentant une partie de sa surface fonctionnalisée pour lui permettre de convertir une partie de la lumière solaire en énergie électrique.

L'écran d'ombrage, selon la présente invention, présente ainsi une zone transparente pour laisser passer la lumière du soleil et une zone dite photovoltaïque, le tout présentant une souplesse suffisante pour pouvoir enrouler et dérouler l'écran d'ombrage, voire de pouvoir le plier à l'image d'un écran d'ombrage traditionnel.

De manière astucieuse, la zone transparente est configurée pour être perméable et ainsi permettre l'évacuation de l'eau et des particules en suspension se déposant sur la surface fonctionnalisée de l'écran d'ombrage. Cette évacuation peut avoir lieu lorsque l'écran d'ombrage est en configuration déployée. Avantageusement, cette évacuation a lieu lorsque l'écran d'ombrage passe de sa configuration déployée à sa configuration repliée. La zone transparente peut par exemple comprendre des trous d'évacuation et/ou une grille drainante par exemple.

Il est à noter que, de manière particulièrement avantageuse, la pluralité de films photovoltaïques comprend des modules photovoltaïques à couches minces. On entend par couches minces (isolante et/ou conductrice), des couches dont l'épaisseur est comprise entre quelques atomes et 250 micromètres, de préférence entre 5 micromètres et 150 micromètres et avantageusement entre 10 micromètres et 100 micromètres.

De manière avantageuse, l'écran d'ombrage, selon la présente invention, peut comprendre un ou des films photovoltaïques comprenant un ou plusieurs modules de type : organique pouvant ou non être imprimable, DSSC-DSC (Dye-Sensitized Solar Cell), ASI (silicium amorphe), CIGS (cuivre, indium, gallium, sélénium), GA (gallium-arsenide), CDTE (tellurure de cadmium), CDS (sélénium), Pérovskite, ou de tous autres types de modules photovoltaïques à couches minces.

De par leur épaisseur, ces modules photovoltaïques sont souples et peuvent ainsi être déformés sans que leur fonctionnalité photovoltaïque n'en soit affectée.

Dans un souci de protection, ces modules photovoltaïques sont de préférence encapsulés dans un ou plusieurs films d'encapsulation sur un substrat métallique, ou polymère métallisé, ou tous autres types de substrats non métallisés.

Ces films d'encapsulation sont transparents aux rayonnements solaires et peuvent par exemple être à base de films plastiques ou plus généralement à base de polymères.

Cette encapsulation peut ainsi être réalisée à partir de films thermoplastiques, de films comprenant de l'éthylène-acétate de vinyle ou autres. Cette encapsulation permet de former une membrane étanche, possédant une forte capacité de transmission lumineuse et venant protéger les modules photovoltaïques des agressions de l'environnement dans la serre agricole, en particulier de l'humidité supérieure à 90% de l'atmosphère de la serre agricole et des particules biotiques évoluant en suspension dans la serre agricole.

De préférence, cette membrane présente une masse surfacique comprise entre 150 g/m² et 550 g/m², de préférence entre 200 g/m² et 500 g/m² et avantageusement entre 250 g/m² et 450 g/m².

Du fait de sa souplesse, l'écran d'ombrage selon la présente invention est configuré pour être mécaniquement utilisé comme un écran d'ombrage classique. Il peut ainsi être positionné horizontalement sous la toiture de la serre agricole, il est alors suspendu par exemple, et/ou être positionné verticalement contre les parois latérales de la serre agricole, voire entre des parties de culture de la serre agricole à l'image d'un rideau.

Comme exposé par la suite, la densité et la répartition des cellules photovoltaïques sur l'écran d'ombrage sont fonction du type de cultures et du type d'ensoleillement de la serre agricole.

En effet, l'écran d'ombrage est de préférence réalisé en tenant compte du type de culture, et cela afin de répondre à ses besoins spécifiques en ensoleillement, et de contribuer à la gestion du microclimat de la serre agricole.

De ce fait, la surface occupée par les zones photovoltaïques, mais également la disposition géométrique des zones photovoltaïques relativement aux zones transparentes de l'écran d'ombrage, peuvent être optimisées lors de la conception de chaque écran d'ombrage afin de répondre aux besoins précis d'un certain type de cultures et du lieu géographique de la serre agricole, cela afin de tenir compte de l'ensoleillement dudit lieu géographique.

Cette possibilité d'adapter à volonté la fonctionnalisation de l'écran d'ombrage permet une optimisation des conditions de culture dans une serre agricole en fonction de divers paramètres dont par exemple le type de culture et le taux d'ensoleillement annuel par exemple.

Selon un mode de réalisation présenté par la suite, l'écran d'ombrage peut comprendre des bandes de films photovoltaïques espacées par des bandes de films transparents, ou comprendre une répartition en damier ou en cercles concentriques par exemple.

L'intérêt d'une alternance de formes géométriques de films photovoltaïques avec des formes géométriques, de préférence complémentaires, de films transparents, réside dans la possibilité de laisser passer une quantité prédéterminée de rayons solaires au travers de l'écran d'ombrage.

Un second intérêt réside dans l'évacuation de l'humidité et des particules en suspension accumulées sur les surfaces fonctionnalisées ou non de l'écran d'ombrage. Ainsi, en disposant des films transparents comprenant par exemple une grille drainante, cela permet une évacuation de ces éléments perturbateurs au bon rendement de l'écran d'ombrage.

Concernant la densité, la présente invention peut comprendre par exemple différents rapports de répartition entre zones photovoltaïques et zones transparentes de l'écran d'ombrage : 50/50, 60/40, 70/30 ou encore 80/20.

Ainsi, la présente invention, en plus d'apporter la tenue mécanique d'un écran d'ombrage classique, permet une répartition spatio-temporelle plus homogène de la lumière au niveau de la culture et limite ainsi les phénomènes de photo-inhibition comme les phénomènes de déficit de luminosité, tout en permettant un nettoyage aisé des surfaces de l'écran d'ombrage autrement très vite polluées par le microclimat de la serre agricole.

Comme exposé par la suite, l'écran d'ombrage selon la présente invention est configuré pour se déployer et se replier (par repliement ou par enroulement par exemple) au besoin.

Ainsi, selon un mode de réalisation, l'écran d'ombrage est configuré pour se déployer au-dessus d'une partie au moins de la culture de la serre agricole, selon donc un plan d'extension principal, préférentiellement horizontal.

Et selon un autre mode de réalisation, l'écran d'ombrage est configuré pour se déployer selon un plan d'extension principal préférentiellement vertical, par exemple le long d'une partie des parois de la serre agricole, voire entre deux cultures de la serre agricole.

De même que l'écran d'ombrage est configuré pour être déployé, il est configuré pour être replié.

Cette permutation, de préférence réversible, d'une configuration repliée à une configuration déployée peut être réalisée au moyen d'un mécanisme d'entraînement de l'écran d'ombrage comprenant par exemple des crémaillères et des axes enroulant des câbles d'entraînement. Différents modes de réalisation de mécanismes d'entraînement seront décrits ci-après.

La souplesse de l'écran d'ombrage selon la présente invention lui permet de ne pas présenter d'ombrage important lorsque celui-ci est en configuration repliée.

En particulier, et de manière très avantageuse, le rapport entre l'ombrage maximal en configuration déployée et l'ombrage minimal en configuration repliée de l'écran d'ombrage selon la présente invention est supérieur ou égal à 5, de préférence à 20, et avantageusement à 100.

Selon un exemple, la serre agricole 40 comprend une toiture 42 et l'écran d'ombrage 10 est disposé sous la toiture 42. Ainsi, l'écran d'ombrage 10 est distinct de la toiture 42. L'écran d'ombrage 10 ne forme pas une partie de l'enveloppe externe de la serre 40. L'enveloppe externe de la serre 40 est formée notamment par la toiture 42 et par d'éventuelles parois latérales 44 s'étendant principalement verticalement. Ainsi, les deux faces principales de l'écran d'ombrage 10, c'est-à-dire la face interne tournée au regard des cultures 41 et la face externe, opposée à la face interne, sont situées sous une face interne de la toiture 42. La face interne de la toiture 42 et la face externe de l'écran d'ombrage 10 sont séparées par un espace 43.
La face interne et la face externe de l'écran d'ombrage 10 sont donc au contact de l'atmosphère qui règne dans la serre 40, typiquement une atmosphère très humide.

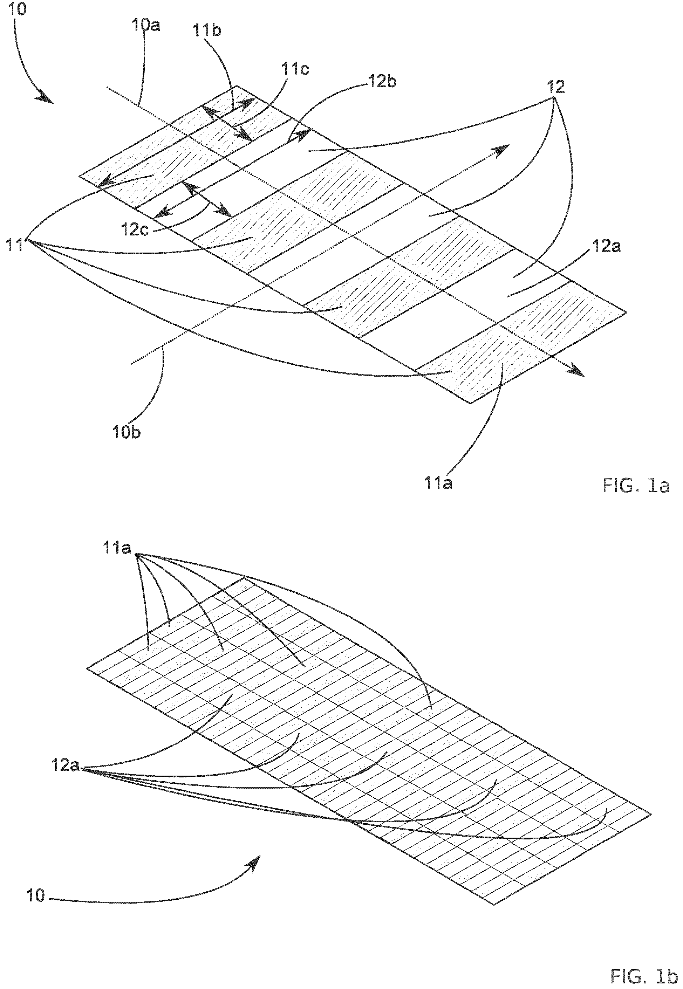

Les figures 1a et 1b représentent un écran d'ombrage 10 selon deux modes de réalisation de la présente invention.

Selon ces deux modes de réalisation, l'écran d'ombrage 10 présente une direction principale d'extension 10a et une direction secondaire d'extension 10b orthogonale à la première.

L'écran d'ombrage 10 comprend une pluralité de films photovoltaïques 11 et une pluralité de films transparents 12 relativement aux rayons 51 du soleil 50.

De manière avantageuse, et selon le mode de réalisation de la figure 1a, la pluralité de films photovoltaïques 11 comprend des bandes de films photovoltaïques 11a présentant chacun une première largeur 11b et une première longueur 11c. La première largeur 11b s'étendant selon la direction principale d'extension 10a de l'écran d'ombrage 10 et la première longueur 11c s'étendant selon la direction secondaire d'extension 10b.

De manière avantageuse, et selon ce mode de réalisation, la pluralité de films transparents 12 comprend des bandes de films transparents 12a présentant chacun une deuxième largeur 12b et une deuxième longueur 12c. La deuxième largeur 12b s'étendant selon la direction principale d'extension 10a de l'écran d'ombrage 10 et la deuxième longueur 12c s'étendant selon la direction secondaire d'extension 10b.

L'écran d'ombrage 10 étant plongé dans l'atmosphère de la serre 40, l'accumulation d'eau et/ou de particules crée une pellicule opacifiante sur les faces de l'écran 10 et en particulier sur la surface de la face de l'écran d'ombrage 10 destiné à recevoir les rayons du soleil 51. Dans le cadre du développement de la présente invention, il a été remarqué que cette accumulation peut être responsable d'une chute significative du rendement des films photovoltaïques 11 et donc du rendement de la serre 40. Selon un exemple de réalisation, on prévoit alors un dispositif drainant et/ou un dispositif de nettoyage tel que décrit par la suite.

De manière préférée, la pluralité de films transparents 12 comprend au moins un dispositif drainant, par exemple une grille drainante 12g, configuré pour évacuer l'humidité et les particules 60 accumulées à la surface de la pluralité de films photovoltaïques 11, plus particulièrement lorsque l'écran d'ombrage 10 est en configuration déployée.

La grille drainante 12g peut être formée ou comprendre une pluralité de trous. La grille drainante 12g peut former ou comprendre un filet. Elle est par exemple faite de tissu et/ou de plastique.

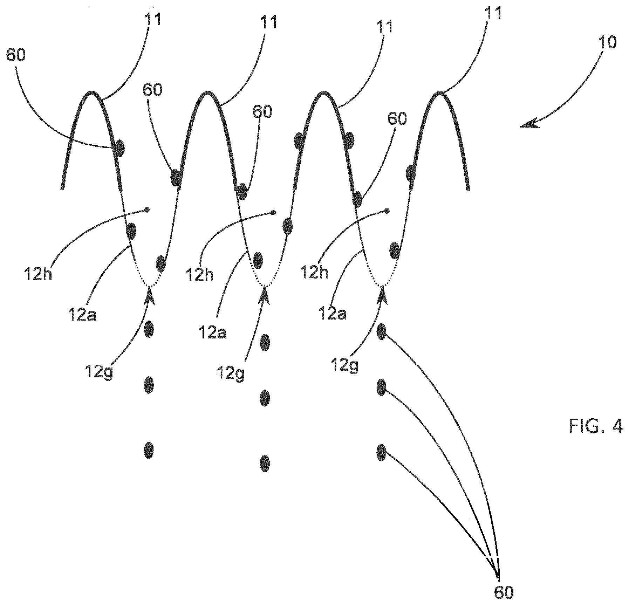

Comme illustré en figure 4, en particulier en configuration repliée, les gouttes et les particules 60 accumulées sur la surface de l'écran 10 et notamment sur les films photovoltaïques 11 s'écoulent jusqu'à atteindre par gravité la grille drainante 12g. Les gouttes et les particules 60 passent alors à travers les orifices de la grille drainante 12g et tombent par gravité en direction du sol.

De manière astucieuse, ce drainage est rendu particulièrement efficace par la souplesse de la grille 12g, souplesse qui est supérieure à celle des films photovoltaïques 11. Ainsi, la grille 12g forme des poches 12h, replis ou creux présentant chacun un point bas orienté vers le sol et favorisant ainsi l'écoulement des gouttes et des particules 60 en direction du fond de la poche 12h.

La grille 12g forme en partie au moins certains au moins des films transparents 12. Ainsi, certains films transparents 12 peuvent être formés entièrement par la grille 12g. De manière combinée ou alternative certains films transparents 12 peuvent formés en partie par la grille 12g

Selon un mode de réalisation, la pluralité de films transparents 12 présente une souplesse plus élevée que la souplesse de la pluralité de films photovoltaïques 11.

Selon un mode de réalisation le dispositif drainant présente une souplesse plus élevée que la souplesse de la pluralité de films photovoltaïques 11.

Selon un mode de réalisation, la première longueur 11c est égale à la deuxième longueur 12c.

Selon un autre mode de réalisation, la première largeur 11b est égale à la deuxième largeur 12b.

Selon encore un autre mode de réalisation, la première longueur 11c et/ou la première largeur 11b sont différentes respectivement de la deuxième longueur 12c et/ou de la deuxième largeur 12b.

De manière particulièrement avantageuse, la pluralité de films photovoltaïques 11 et la pluralité de films transparents 12 sont disposées l'une relativement à l'autre de sorte à former un ombrage adapté à la culture 41 de la serre agricole 40.

Selon un mode de réalisation illustré en figure 1, la pluralité de films photovoltaïques 11 et la pluralité de films transparents 12 sont agencées de sorte à former une alternance de bandes de films photovoltaïques 11a et de bande de films transparents 12a.

Selon le mode de réalisation illustré en figure 1b, la pluralité de films photovoltaïques 11 et la pluralité de films transparents 12 sont co-agencées de sorte à former un damier. Cela permet d'homogénéiser plus efficacement l'ombrage généré par l'écran d'ombrage 10, et d'améliorer l'évacuation des polluants atmosphériques (particules biotiques en suspension et humidité) de la serre se déposant sur les films photovoltaïques 11.

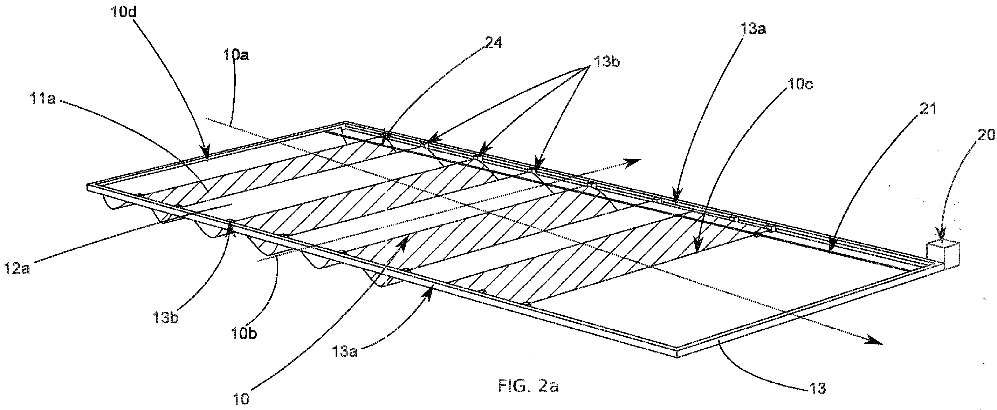

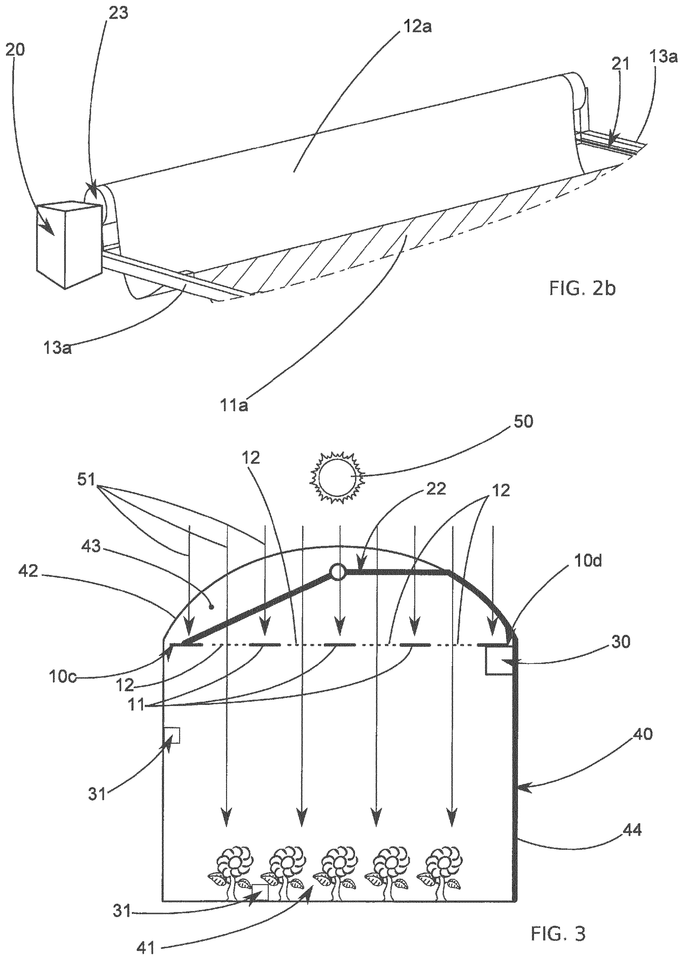

Les figures 2a et 2b représentent des modes de réalisation de la présente invention dans lesquels l'écran d'ombrage 10 est supporté, en partie au moins, par un cadre rigide 13. Ce cadre rigide 13 peut être formé d'une ou de plusieurs éléments rigides 13a sur lesquels l'écran d'ombrage 10 est monté mobile en translation.

Ainsi, le cadre 13 peut comprendre par exemple une simple tringle 13a configurée pour supporter, par exemple au moyen d'attache 13b, une partie de l'écran d'ombrage 10 à l'image d'une tringle supportant un rideau par exemple. Ce mode de réalisation s'applique particulièrement à des écrans d'ombrage 10 disposés à la verticale, par exemple le long de parois internes de la serre agricole 40.

De manière avantageuse, la simple tringle 13a peut comprendre au moins un câble de support, et de préférence au moins deux câbles de support destinés à supporter l'écran d'ombrage 10.

Selon un autre mode de réalisation, le cadre 13 présente donc au moins deux éléments linéaires rigides 13a le long desquels l'écran d'ombrage 10 est configuré pour translater et être ainsi déployé et/ou replié, par exemple en étant replié sur lui-même, ou en accordéon, ou encore en étant enroulé sur lui-même ou autour d'un axe par exemple. Dans la suite de la description, tous les modes de réalisation dans lesquels il sera indiqué que l'écran d'ombrage 10 est replié pourront être substitués par des modes de réalisation dans lesquels l'écran d'ombrage 10 est enroulé.

Dans la suite de la description, le terme tringle couvre également le cas où la tringle est formée d'un ou de plusieurs câbles de support tendus. Aussi on comprendra que le cadre 13 peut comprendre, voire être formé, par des câbles 13a de support tendus sur lesquels l'écran d'ombrage 10 coulisse au moyen d'œillets 13b par exemple. Ici encore, le terme attache couvre également le terme œillet.

Selon les modes de réalisation illustrés en figures 2a et 2b, l'écran d'ombrage 10 est solidarisé au cadre 13 au moyen par exemple d'attaches 13a au niveau des deux éléments linéaires rigides 13a s'étendant selon la direction principale d'extension 10a et étant disposés de part et d'autre de l'écran d'ombrage 11 selon la direction secondaire d'extension 10b. Le déploiement et le repliement de l'écran d'ombrage 10 peuvent ainsi se faire simplement par translation selon la direction principale d'extension 10a le long des deux éléments linéaires rigides 13a.

De préférence, ces deux éléments linéaires rigides peuvent comprendre des axes de support, par exemple métalliques, ou encore comprendre des câbles de support.

Selon un mode de réalisation préféré, ces deux éléments linéaires sont formés par des câbles tendus, et peuvent ne pas être rigides.

Selon le mode de réalisation représenté par la figure 2a, l'écran d'ombrage 10 peut être replié sur lui-même lorsqu'il n'est pas en configuration déployée.

Selon le mode de réalisation représenté par la figure 2b, l'écran d'ombrage 10 peut être enroulé sur lui-même lorsqu'il n'est pas en configuration déployée.

Selon un mode de réalisation préféré, l'écran d'ombrage 10 est supporté, en partie au moins, par un support 13 comprenant au moins un câble 13a de support, et de préférence au moins deux câbles 13a de support et avantageusement au moins trois câbles 13a de support. L'écran d'ombrage 10 comprend avantageusement au moins une pluralité d'œillets configurés pour coopérer avec lesdits câbles de support.

De manière avantageuse, le déploiement et le repliement de l'écran d'ombrage 10 peuvent être réalisés manuellement ou via un dispositif d'actionnement 20, dans cet exemple, un dispositif motorisé.

Dans le cas d'un déploiement manuel, un utilisateur prend une extrémité libre de 10c l'écran d'ombrage 10, tandis que l'extrémité opposée, dite extrémité fixe 10d, est solidaire du cadre 13, puis l'utilisateur étend dès lors l'écran d'ombrage 10 selon la direction principale d'extension 10a.

Dans le cas d'un repliement manuel, un utilisateur prend l'extrémité libre 10c de l'écran d'ombrage 10, puis l'utilisateur replie dès lors l'écran d'ombrage 10 selon un sens opposé à la direction principale d'extension 10c, c'est-à-dire dans un sens opposé à celui du déploiement.

Dans le cas d'un déploiement au moyen d'un dispositif d'actionnement 20, le dispositif d'actionnement 20 peut comprendre un bras articulé 22 et/ou un câble d'entraînement 21 et/ou un moteur avec un axe moteur 23 selon divers modes de réalisation.

Selon un mode de réalisation, tel qu'illustré en figure 3 par exemple, le bras articulé 22 peut comprendre une extrémité solidaire de l'extrémité libre 10c de l'écran d'ombrage 10 et une extrémité solidaire de la structure de la serre agricole 40. Le bras articulé 22 présente avantageusement une configuration déployée et une configuration repliée. Lorsque le bras articulé 22 passe d'une configuration repliée à une configuration déployée, il entraîne avec lui l'extrémité libre 10c de l'écran d'ombrage 10.

Dans le cas du repliement de l'écran d'ombrage 10, il suffit que le bras articulé 22 passe d'une configuration déployée à une configuration repliée et entraîne avec lui l'extrémité libre 10c de l'écran d'ombrage 10.

La souplesse de l'écran d'ombrage 10 permet à celui-ci de se replier sur lui-même et de présenter un encombrement très limité ainsi que la possibilité d'utiliser une force motrice très réduite compte tenu du poids très faible de l'écran d'ombrage 10 relativement à des panneaux photovoltaïques rigides.

Selon un autre mode de réalisation illustré par les figures 2a et 2b, le câble d'entraînement 21 peut être solidaire de l'extrémité libre 10c de l'écran d'ombrage 10 et entraîner celui-ci depuis une configuration repliée vers une configuration déployée simplement en exerçant une force de traction sur l'extrémité libre 10c. Un mécanisme de crémaillère peut être utilisé pour la mise en mouvement du câble d'entraînement 21 par exemple.

Pour le repliement de l'écran d'ombrage 10, selon le mode de réalisation de la figure 2a, il est possible d'utiliser un câble de repliement 24. Ce câble de repliement 24 est avantageusement relié à l'extrémité libre 10c de l'écran d'ombrage 10 et configuré pour l'entraîner selon un sens opposé à celui du câble d'entraînement 21 en la rapprochant de l'extrémité fixe 10d, de préférence solidaire du cadre 10. Un mécanisme de crémaillère peut être utilisé pour la mise en mouvement du câble de repliement 24 par exemple.

Selon un mode de réalisation, le câble d'entraînement 21 et le câble de repliement forment une boucle à laquelle l'extrémité libre 10c de l'écran d'ombrage est solidaire en un point. Ainsi la mise en mouvement de cette boucle au moyen d'une roue entraînée par une crémaillère par exemple, permet le déploiement et le repliement de l'écran d'ombrage simplement en changeant le sens de rotation de ladite roue.

Enfin, selon encore le mode de réalisation illustré en figure 2b, le câble d'entraînement 21 peut assurer le déploiement de l'écran d'ombrage, mais le repliement peut être effectué par enroulement de l'écran d'ombrage 10 autour d'un axe moteur 23.

En effet, avantageusement, et afin de limiter l'encombrement de l'écran d'ombrage 10 en configuration repliée, celui-ci peut être enroulé autour d'un axe moteur 23 afin d'en contrôler le repliement.

De manière astucieuse, un dispositif de nettoyage mécanique peut être envisagé de sorte à venir brosser par exemple au moins une et de préférence les deux faces principales de l'écran d'ombrage 10, lors par exemple de son repliement. Selon un mode de réalisation, l'écran d'ombrage 10 traverse une simple ou double brosse lors de son déploiement et lors de son repliement de sorte à nettoyer ses surfaces.

Dans le cas d'une disposition verticale de l'écran d'ombrage 10, l'axe moteur 23 peut également servir de système de déploiement par simple déroulement de l'écran d'ombrage 10, celui-ci s'étendant selon une direction verticale ensuite par gravité, en ajoutant si nécessaire un poids au niveau de l'extrémité libre 10c de l'écran d'ombrage.

De préférence, la distance entre l'extrémité libre 10c de l'écran d'ombrage 10 et l'extrémité fixe 10d de l'écran d'ombrage 10 augmente lorsque l'écran d'ombrage 10 passe d'une configuration repliée à une configuration déployée.

De préférence, la distance entre l'extrémité libre 10c de l'écran d'ombrage 10 et l'extrémité fixe 10d de l'écran d'ombrage 10 diminue lorsque l'écran d'ombrage 10 passe d'une configuration déployée à une configuration repliée.

De manière avantageuse, le dispositif d'actionnement 20 peut être piloté manuellement et/ou automatiquement au travers d'un dispositif de pilotage 30 configuré pour piloter le dispositif d'actionnement 20.

Dans le cas d'un pilotage manuel, le dispositif de pilotage 30 peut comprendre un panneau de contrôle ou encore une télécommande de pilotage à distance par exemple.

Dans le cas d'un pilotage automatique, le dispositif de pilotage 30 peut comprendre un produit programme d'ordinateur comprenant une pluralité d'instructions stockée dans un module mémoire et au moins un module de gestion électronique configuré pour interpréter et exécuter lesdites instructions, le tout étant alimenté par un module d'alimentation électrique et entre autres cadencé via un module d'horloge.

Ce module d'alimentation électrique peut par exemple comprendre une alimentation secteur et/ou une batterie et un onduleur configuré pour apporter de l'énergie électrique collectée par l'écran d'ombrage 10 à ladite batterie.

Le module d'horloge est de préférence configuré pour mesurer le temps et par exemple gérer le déploiement et/ou le repliement de l'écran d'ombrage 10 à des dates, voire à des heures précises.

De manière avantageuse, le dispositif de pilotage 30 comprend au moins un capteur 31, et de préférence une pluralité de capteurs 31. Ce ou ces capteurs 31 ont pour fonction de mesurer au moins une grandeur physique et de la transmettre au module de gestion électronique où ces mesures sont prises en compte dans l'exécution desdites instructions.

Ainsi par exemple, le dispositif de pilotage 30 peut comprendre un capteur de luminosité configuré pour évaluer un niveau d'ensoleillement d'une partie de la culture 41 de la serre agricole 40. Cette partie de la culture 41 de la serre agricole 40 peut ou non être celle pouvant être ombragée par l'écran d'ombrage 10. En effet, le déploiement de l'écran d'ombrage 10 sur une autre partie de la culture 41 de la serre agricole 40 permet de réduire la température de la serre agricole 40 en des points non ombragés, simplement par refroidissement d'une partie de la serre agricole 40.

Avantageusement, selon la mesure du niveau d'ensoleillement, par exemple de la luminosité mesurée, le dispositif de pilotage 30 compare cette valeur à un seuil prédéfini et détermine si il est nécessaire de déployer ou de replier l'écran d'ombrage 10 afin respectivement de réduire ou d'accroître l'ensoleillement d'une partie de la culture 41 de la serre agricole 40.

De manière avantageuse, le dispositif de pilotage 30 peut également comprendre un capteur d'humidité, ou encore un capteur de pression atmosphérique, un pyranomètre ou bien également un dendromètre par exemple.

Le module de gestion électronique reçoit ainsi une ou plusieurs mesures d'un ou d'une pluralité de paramètres physiques que sont par exemple le niveau de luminosité, la température dans la serre agricole 40, le niveau d'humidité dans la serre agricole 40, la pression atmosphérique dans la serre agricole 40, la date, l'heure, voire même des données météorologiques.

Sur la base de cette ou de ces données, le dispositif de pilotage 30 déploie et/ou replie l'écran d'ombrage 10, voir ne le déploie et/ou ne le replie qu'en partie. La gestion de l'écran d'ombrage 10 a pour fonction la préservation du microclimat de la serre agricole 40 afin de le protéger contre par exemple non limitatif le stress oxydatif, la saturation de la photosynthèse et de la photo-inhibition

La figure 3 représente une vue en coupe d'une serre agricole 40 comprenant un écran d'ombrage 10, un dispositif d'actionnement 20 comprenant un bras articulé 22, comme précédemment présenté, et un dispositif de pilotage 30.

Sur cette figure est représenté schématiquement l'ensoleillement d'une culture 41 à l'intérieur d'une serre agricole 40 au travers d'un écran d'ombrage 10 selon la présente invention. On notera également la présence d'un bras articulé 22 à titre d'exemple d'élément moteur de déploiement et de repliement de l'écran d'ombrage 10.

On notera également la présence de capteurs 31 disposés à divers endroit de la serre agricole 40. Par exemple, un capteur de température 31 peut être disposé eu niveau d'une culture, tandis qu'un autre capteur, par exemple d'humidité, peut lui être disposé le long d'une paroi de la serre agricole 40.

Cette figure illustre le trajet de rayons solaires 51 au travers l'écran d'ombrage 10 selon la présente invention. Comme décrit précédemment, les zones transparentes laissent passer les rayons solaires, tandis que les zones photovoltaïques les absorbent.

Il est à noter que la température à l'intérieur d'une serre agricole 40 en production peut atteindre au chéneau jusqu'à 50°C. De manière avantageuse, l'écran d'ombrage 10 selon la présente invention est configuré de préférence pour résister jusqu'à 70°C au moins en exposition continue. C'est-à-dire que ses performances photovoltaïques restent sensiblement stables jusqu'à 70°C au moins en exposition continue. Au-delà de 70°C, une perte de performance peut néanmoins se produire.

De plus, la répartition et la densité des zones photovoltaïques et des zones transparentes permettent un abaissement des températures de l'air ambiant et des cultures, et en particulier une diminution de la température des fruits ou végétaux exposés durant les périodes à fort ensoleillement tout en bénéficiant d'une production électrique.

Cela permet également de conserver des performances de fonctionnement optimales pour les modules photovoltaïques.

Lors du développement de la présente invention, il a été observé que les films photovoltaïques comprenant des modules photovoltaïques en silicium amorphe (ASI) peuvent avoir un rendement de conversion de lumière en électricité de 8 à 9%, ce qui permet de fournir une puissance de 75 W/m² de surface photovoltaïque en condition standard de test (STC), c'est-à-dire à 25°C avec un ensoleillement de 1000 W/m² et un coefficient d'atténuation massique de l'air de 1,5. Alors que les films solaires de CIGS peuvent avoir un rendement de 12 à 13%, soit une puissance de 120 W/m², les films GA peuvent avoir notamment un rendement de 25% soit une puissance de 250 W/m² dans les mêmes conditions.

Ainsi, ces matériaux ont parfois un rendement de conversion photovoltaïque inférieur aux cellules solaires rigides en silicium cristallin, c'est-à-dire aux traditionnels panneaux photovoltaïques rigides.

Cependant, il a été observé que pour n'avoir aucun impact négatif sur la culture, c'est-à-dire pour ne pas réduire de trop l'exposition de la culture au soleil, la couverture photovoltaïque en panneaux photovoltaïques rigides doit être au maximum de 20%. En effet, ces panneaux photovoltaïques rigides étant montés fixes, un trop grand nombre de panneaux photovoltaïques rigides entraîne une réduction importante de l'ensoleillement de la culture dans la serre agricole.

De manière avantageuse et astucieuse, la capacité de l'écran d'ombrage, selon la présente invention, à être déployé et replié à volonté permet de moduler l'ombrage et donc l'ensoleillement, et permet dans certaines conditions d'atteindre jusqu'à 80% de couverture photovoltaïque sans impacter le rendement de la serre agricole.

Ainsi, quand bien même la technologie des modules photovoltaïques utilisés présente des performances moindres à celle des panneaux photovoltaïques rigides, la mobilité et la souplesse de l'écran d'ombrage de la présente invention permettent une amélioration du rendement de la serre agricole à la fois d'un point de vue de l'énergie photovoltaïque, mais également agricole.

Selon un mode de réalisation non illustré, l'écran d'ombrage peut être réalisé sous forme de stores à l'intérieur des serres agricoles ou bien être placé directement sur le toit des serres agricoles.

La présente invention permet d'apporter une contribution majeure au contrôle du microclimat d'une serre agricole en étant disposé directement à l'intérieur de celle-ci, en étant immergé dans son microclimat. L'utilisation d'une pluralité de capteurs permet un pilotage astucieux de l'écran d'ombrage mobile qui de plus assure une collecte d'énergie électrique tout en aidant la production agricole. Enfin, l'écran d'ombrage est conçu spécialement pour tenir compte de la nature très particulière de l'atmosphère de la serre agricole présentant un taux d'humidité de plus de 90% et des particules biotiques en suspensions. Cette atmosphère, de par les dépôts de surface qu'elle occasionne, pourrait alors nuire à la fonction de collecte d'énergie solaire et à la fonction de laisser passer une partie de la lumière par l'écran d'ombrage sans une conception astucieuse de celui-ci visant à permettre l'évacuation évacuer ces polluants de surface.

Enfin, la présente invention permet aux filières horticoles, ornementales et légumières de satisfaire aux objectifs du développement durable tout en proposant des systèmes mixtes agricoles et photovoltaïques dans les zones urbaines et péri-urbaines par exemple.

### REFERENCES

- 10.: Ecran d'ombrage
10a. Direction principale d'extension
10b. Direction secondaire d'extension
10c. Extrémité libre
10d. Extrémité fixe
- 11.: Pluralité de films photovoltaïques
11a. Bande de films photovoltaïques
11b. Première largeur de la bande de films photovoltaïques
11c. Première longueur de la bande de films photovoltaïques
- 12.: Pluralité de films transparents
12a. Bande de films transparents
12b. Deuxième largeur de la bande de films transparents
12c. Deuxième longueur de la bande de films transparents
12g. Grille drainante
12h. Poche
- 13.: Cadre
13a. Tringle
13b. Attache
- 20.: Dispositif d'actionnement
- 21.: Câble d'entraînement
- 22.: Bras articulé
- 23.: Axe moteur
- 24.: Câble de repliement
- 30.: Dispositif de pilotage
- 31.: Capteur
- 40.: Serre agricole
- 41.: Culture
- 42.: Toiture
- 43.: Espace entre la toiture et l'écran d'ombrage
- 44.: Paroi latérale
- 50.: Soleil
- 51.: Rayons du soleil
- 60.: Goutte et particule

## Revendications

1. Ecran d'ombrage (10) mobile configuré pour être disposé à l'intérieur d'une serre agricole (40), l'écran d'ombrage (10) étant suffisamment souple pour se déformer sous l'action de son poids et étant apte à ombrager au moins une partie d'une culture (41) logée dans une serre agricole (40), **caractérisé en :**
a. **ce qu'**il est configuré pour coopérer avec un support (13) afin de présenter alternativement une configuration déployée correspondant à une première surface d'ombrage s'étendant de préférence principalement dans un plan horizontal et une configuration repliée correspondant à une deuxième surface d'ombrage, inférieure à la première surface d'ombrage, et
b. **en ce qu'**il s'étend selon une surface d'extension principale qui comprend au moins :
▪ Une pluralité de films photovoltaïques (11), de préférence chaque film photovoltaïque de la pluralité de films photovoltaïques (11) étant suffisamment souple pour se déformer sous l'action de son poids ;
▪ Une pluralité de films transparents (12) relativement à la lumière du soleil (50), de préférence chaque film transparent de la pluralité de films transparents (12) étant suffisamment souple pour se déformer sous l'action de son poids, chaque film transparent de la pluralité de films transparents (12) étant configuré pour laisser passer la lumière du soleil vers au moins une partie de la culture (41) ;
o Ladite surface d'extension principale présente une alternance de films photovoltaïques et de films transparents.

2. Ecran d'ombrage (10) selon la revendication précédente dans lequel, en configuration repliée, l'écran d'ombrage (10) est configuré pour être enroulé sur lui-même selon un diamètre inférieur ou égal à 30 cm, de préférence à 20 cm et avantageusement à 10 cm, le diamètre mesuré correspondant au diamètre interne du tube formé par l'écran d'ombrage (10) enroulé sur lui-même.

3. Ecran d'ombrage (10) selon l'une quelconque des revendications précédentes dans lequel le rapport entre le rayon de courbure de l'écran d'ombrage (10) en configuration déployée et le rayon de courbure de l'écran d'ombrage (10) en configuration repliée est supérieur à 5, de préférence à 20, et avantageusement à 100.

4. Ecran d'ombrage (10) selon l'une quelconque des revendications précédentes dans lequel le rapport entre la première surface d'ombrage et la deuxième surface d'ombrage est supérieur à 5, de préférence à 20, et avantageusement à 100.

5. Ecran d'ombrage (10) selon l'une quelconque des revendications précédentes comprenant une extrémité libre (10c) et une extrémité fixe (10d), opposée à l'extrémité libre (10c), l'extrémité fixe (10d) étant solidaire d'une partie d'une serre agricole (40), et dans lequel le rapport entre la distance entre l'extrémité libre (10c) et l'extrémité fixe (10d) en configuration déployée et la distance entre l'extrémité libre (10c) et l'extrémité fixe (10d) en configuration repliée est supérieur à 5, de préférence à 20, et avantageusement à 100.

6. Ecran d'ombrage (10) selon l'une quelconque des revendications précédentes dans lequel une partie au moins de la pluralité de films photovoltaïques (11) s'étend principalement dans un plan horizontal lorsque l'écran d'ombrage (10) est en configuration déployée.

7. Ecran d'ombrage (10) selon l'une quelconque des revendications précédentes dans lequel le pourcentage de la surface d'extension principale occupé par la pluralité de films photovoltaïques (11) est compris entre 30% et 90%, de préférence entre 40% et 80% et avantageusement entre 50% et 70%, et dans lequel le pourcentage de la surface d'extension principale occupé par la pluralité de films transparents (12) est compris entre 10% et 70%, de préférence entre 20% et 60% et avantageusement entre 30% et 50%.

8. Ecran d'ombrage (10) selon l'une quelconque des revendications précédentes dans lequel chaque film photovoltaïque de la pluralité de films photovoltaïques (11) présente une épaisseur comprise entre 1nm et 250µm, de préférence entre 5µm et 150µm et avantageusement entre 10µm et 100µm.

9. Système d'ombrage comprenant au moins un écran d'ombrage (10) selon l'une quelconque des revendications précédentes, au moins un support (13) configuré pour coopérer avec ledit écran d'ombrage (10) et au moins un dispositif d'actionnement (20) configuré pour faire passer alternativement l'écran d'ombrage (10) de la configuration déployée à la configuration repliée.

10. Système d'ombrage destiné à être disposé à l'intérieur d'une serre agricole (40) selon la revendication précédente dans lequel, en configuration déployée, l'écran d'ombrage (10) s'étend principalement selon un plan horizontal, de préférence au-dessus d'au moins une partie d'une culture (41) située dans une serre agricole (40).

11. Système d'ombrage selon l'une quelconque des deux revendications précédentes le dispositif d'actionnement (20) comprend au moins un bras articulé (22) configuré pour faire alternativement passer l'écran d'ombrage (10) depuis la configuration déployée vers la configuration repliée et depuis la configuration repliée vers la configuration déployée.

12. Système d'ombrage selon l'une quelconque des trois revendications précédentes le dispositif d'actionnement (20) comprend un moteur (20) comprenant un axe moteur (23) configuré pour faire passer l'écran d'ombrage (10) depuis la configuration déployée vers la configuration repliée en enroulant autour de l'axe moteur (23) l'écran d'ombrage (10) sur lui-même et/ou depuis la configuration repliée vers la configuration déployée en déroulant l'écran d'ombrage (10) autour de l'axe moteur (23).

13. Système d'ombrage selon l'une quelconque des revendications 9 à 12 comprenant un dispositif de pilotage (30) configuré pour piloter le dispositif d'actionnement (20) et dans lequel le dispositif de pilotage (30) comprend au moins un capteur (31) pris parmi au moins : un capteur de luminosité, un capteur de température, un capteur d'humidité, un pyranomètre, un anémomètre, un dendromètre, un pluviomètre, un capteur de radiations.

14. Serre agricole (40) comprenant au moins un système selon l'une quelconque des revendications 9 à 13.

15. Procédé de pilotage du déploiement et/ou du repliement d'un système d'ombrage selon l'une quelconque des revendications 9 à 13, le système d'ombrage étant destiné à être disposé à l'intérieur d'une serre agricole (40) et comprenant au moins un dispositif de pilotage (30) du dispositif d'actionnement (20), le procédé comprenant au moins le cycle d'étapes suivantes:
o Détermination d'un paramètre de pilotage du dispositif d'actionnement (20) par le dispositif de pilotage (30) ;
o Modification de la configuration de l'écran d'ombrage (10) par le dispositif d'actionnement (20) piloté par le dispositif de pilotage (30) en fonction du paramètre de pilotage.

## Patentansprüche

1. Beweglicher Verschattungsschirm (10), der so konfiguriert ist, dass er innerhalb eines landwirtschaftlichen Gewächshauses (40) angeordnet ist, wobei der Verschattungsschirm (10) flexibel genug ist, um sich unter der Einwirkung seines Gewichts zu verformen und geeignet ist, mindestens einen Teil einer Kultur (41) zu verschatten, die in einem landwirtschaftlichen Gewächshaus (40) untergebracht ist, **dadurch gekennzeichnet:**
a. **dass** er so konfiguriert ist, dass es mit einem Träger (13) zusammenarbeitet, um abwechselnd eine entfaltete Konfiguration darzustellen, die einer ersten Verschattungsfläche entspricht, die sich vorzugsweise hauptsächlich in einer horizontalen Ebene erstreckt, und eine gefaltete Konfiguration, die einer zweiten Verschattungsfläche entspricht, die kleiner als die erste Verschattungsfläche ist, und
b. dadurch, dass er sich über eine Haupterweiterungsfläche erstreckt, die mindestens Folgendes umfasst:
• Eine Vielzahl von Photovoltaikfolien (11), wobei vorzugsweise jede Photovoltaikfolie der Vielzahl von Photovoltaikfolien (11) flexibel genug ist, um sich unter der Einwirkung ihres Gewichts zu verformen;
• Mehrere transparente Folien (12) relativ zum Sonnenlicht (50), wobei vorzugsweise jede transparente Folie der Vielzahl von transparenten Folien (12) flexibel genug ist, um sich unter der Einwirkung ihres Gewichts zu verformen, wobei jede transparente Folie der Vielzahl von transparenten Folien (12) so konfiguriert ist, dass sie Sonnenlicht zu mindestens einem Teil der Kultur (41) durchlässt;
o Diese Haupterweiterungsfläche weist einen Wechsel von Photovoltaikfolien und transparenten Folien auf.

2. Verschattungsschirm (10) nach dem vorhergehenden Anspruch, wobei der Verschattungsschirm (10) in gefalteter Konfiguration so konfiguriert ist, dass er um sich selbst gewickelt wird, mit einem Durchmesser kleiner oder gleich 30 cm, vorzugsweise 20 cm und vorteilhafterweise 10 cm, wobei der gemessene Durchmesser dem Innendurchmesser des Rohrs entspricht, das durch den um sich gewickelten Verschattungsschirm (10) gebildet wird.

3. Verschattungsschirm (10) nach einem der vorhergehenden Ansprüche, wobei das Verhältnis zwischen dem Krümmungsradius des Verschattungsschirms (10) in entfalteter Konfiguration und dem Krümmungsradius des Verschattungsschirms (10) in gefalteter Konfiguration größer als 5, vorzugsweise 20 und vorteilhafterweise 100 ist.

4. Verschattungsbildschirm (10) nach einem der vorhergehenden Ansprüche, wobei das Verhältnis zwischen der ersten Verschattungsfläche und der zweiten Verschattungsfläche größer als 5, vorzugsweise 20 und vorteilhafterweise 100 ist.

5. Verschattungsschirm (10) nach einem der vorhergehenden Ansprüche, der ein freies Ende (10c) und ein festes Ende (10d) umfasst, das dem freien Ende (10c) gegenübersteht, wobei das feste Ende (10d) mit einem Teil eines landwirtschaftlichen Gewächshauses (40) verbunden ist, und wobei das Verhältnis zwischen dem Abstand zwischen dem freien Ende (10c) und dem festen Ende (10d) in entfalteter Konfiguration und dem Abstand zwischen dem freien Ende (10c) und dem festen Ende (10d) in gefalteter Konfiguration größer als 5 ist, vorzugsweise 20 und vorteilhafterweise 100.

6. Verschattungsschirm (10) nach einem der vorhergehenden Ansprüche, wobei sich mindestens ein Teil der Vielzahl von Photovoltaikfolien (11) hauptsächlich in einer horizontalen Ebene erstreckt, wenn der Verschattungsschirm (10) in entfalteter Konfiguration ist.

7. Verschattungsbildschirm (10) nach einem der vorhergehenden Ansprüche, wobei der Prozentsatz der Haupterweiterungsfläche, die von der Vielzahl von Photovoltaikfolien (11) belegt wird, zwischen 30 % und 90 %, vorzugsweise zwischen 40 % und 80 % und vorteilhafterweise zwischen 50 % und 70 % liegt, und wobei der Prozentsatz der Haupterweiterungsfläche, die von der Vielzahl von transparenten Folien (12) belegt wird, zwischen 10 % und 70 %, vorzugsweise zwischen 20 % und 60 % und vorteilhafterweise zwischen 30 % und 50 % liegt.

8. Verschattungsschirm (10) nach einem der vorhergehenden Ansprüche, wobei jede Photovoltaikfolie der Vielzahl von Photovoltaikfolien (11) eine Dicke zwischen 1 nm und 250 µm, vorzugsweise zwischen 5 µm und 150 µm und vorteilhafterweise zwischen 10 µm und 100 µm aufweist.

9. Verschattungssystem, das mindestens einen Verschattungsschirm (10) nach einem der vorhergehenden Ansprüche, mindestens einen Träger (13) umfasst, der so konfiguriert ist, dass er mit dem Verschattungsschirm (10) zusammenarbeitet, und mindestens eine Betätigungsvorrichtung (20), die so konfiguriert ist, dass sie den Verschattungsschirm (10) abwechselnd von der entfalteten in die gefaltete Konfiguration überführt.

10. Verschattungssystem zur Anordnung innerhalb eines landwirtschaftlichen Gewächshauses (40) nach dem vorhergehenden Anspruch, wobei sich der Verschattungsschirm (10) in entfalteter Konfiguration hauptsächlich in einer horizontalen Ebene erstreckt, vorzugsweise über mindestens einen Teil einer Kultur (41), die sich in einem landwirtschaftlichen Gewächshaus (40) befindet.

11. Verschattungssystem nach einem der beiden vorhergehenden Ansprüche, wobei die Betätigungsvorrichtung (20) mindestens einen Gelenkarm (22) umfasst, der so konfiguriert ist, dass er den Verschattungsschirm (10) abwechselnd von der entfalteten Konfiguration in die gefaltete Konfiguration und von der gefalteten Konfiguration in die entfaltete Konfiguration überführt.

12. Verschattungssystem nach einem der drei vorhergehenden Ansprüche, wobei die Betätigungsvorrichtung (20) einen Motor (20) umfasst, der eine Motorachse (23) umfasst, die so konfiguriert ist, dass sie den Verschattungsschirm (10) von der entfalteten Konfiguration in die gefaltete Konfiguration überführt, indem sie den Verschattungsschirm (10) um die Motorachse (23) herum um sich selbst wickelt, und/oder von der gefalteten Konfiguration in die entfaltete Konfiguration, indem sie den Verschattungsschirm (10) um die Motorachse (23) herum ausrollt.

13. Verschattungssystem nach einem der Ansprüche 9 bis 12, das eine Steuervorrichtung (30) umfasst, die zum Steuern der Betätigungsvorrichtung (20) konfiguriert ist, und wobei die Steuervorrichtung (30) mindestens einen Sensor (31) umfasst, der aus mindestens einem der folgenden ausgewählt wird: einem Lichtsensor, einem Temperatursensor, einem Feuchtigkeitssensor, einem Pyranometer, einem Anemometer, einem Dendrometer, einem Regenmesser und einem Strahlungssensor.

14. Landwirtschaftliches Gewächshaus (40), das mindestens ein System nach einem der Ansprüche 9 bis 13 umfasst.

15. Verfahren zur Steuerung des Entfaltens und/oder Faltens eines Verschattungssystems nach einem der Ansprüche 9 bis 13, wobei das Verschattungssystem dazu bestimmt ist, innerhalb eines landwirtschaftlichen Gewächshauses (40) angeordnet zu sein und mindestens eine Steuervorrichtung (30) der Betätigungsvorrichtung (20) umfasst, wobei das Verfahren mindestens den Zyklus folgender Schritte umfasst:
o Bestimmung eines Steuerparameters der Betätigungsvorrichtung (20) durch die Steuervorrichtung (30);
o Änderung der Konfiguration des Verschattungsbildschirms (10) durch die Betätigungsvorrichtung (20), die von der Steuervorrichtung (30) in Abhängigkeit vom Steuerparameter gesteuert wird.

## Claims

1. Movable shading screen (10) configured to be disposed inside an agricultural greenhouse (40), the shading screen (10) being flexible enough to deform under the action of its weight and being able to shade at least a part of a crop (41) housed in an agricultural greenhouse (40), **characterised:**
a. **in that** it is configured to cooperate with a support (13) in order to alternatively present a deployed configuration corresponding to a first shading surface preferably extending primarily in a horizontal plane and a folded configuration corresponding to a second shading surface, smaller than the first shading surface, and
b. **in that** it extends along a main extension surface that comprises at least:
• A plurality of photovoltaic films (11), preferably each photovoltaic film of the plurality of photovoltaic films (11) being flexible enough to deform under the action of its weight;
• A plurality of films (12) transparent in relation to sunlight (50), preferably each transparent film of the plurality of transparent films (12) being flexible enough to deform under the action of its weight, each transparent film of the plurality of transparent films (12) being configured to allow sunlight to pass to at least a portion of the crop (41);
o Said main extension surface has an alternation of photovoltaic films and transparent films.

2. Shading screen (10) according to the preceding claim wherein, in the folded configuration, the shading screen (10) is configured to be wound on itself according to a diameter less than or equal to 30 cm, preferably 20 cm and advantageously 10 cm, the measured diameter corresponding to the inside diameter of the tube formed by the shading screen (10) wound on itself.

3. Shading screen (10) according to any one of the preceding claims, wherein the ratio between the radius of curvature of the shading screen (10) in deployed configuration and the radius of curvature of the shading screen (10) in folded configuration is greater than 5, preferably 20, and advantageously 100.

4. Shading screen (10) according to any one of the preceding claims wherein the ratio between the first shading surface and the second shading surface is greater than 5, preferably 20, and advantageously 100.

5. Shading screen (10) according to any one of the preceding claims, comprising a free end (10c) and a fixed end (10d) opposite the free end (10c), the fixed end (10d) being secured to a part of an agricultural greenhouse (40), and wherein the ratio between the distance between the free end (10c) and the fixed end (10d) in deployed configuration and the distance between the free end (10c) and the fixed end (10d) in folded configuration is greater than 5, preferably 20, and advantageously 100.

6. Shading screen (10) according to any one of the preceding claims, wherein at least a portion of the plurality of photovoltaic films (11) extends principally in a horizontal plane when the shading screen (10) is in deployed configuration.

7. Shading screen (10) according to any one of the preceding claims, wherein the percentage of the main extension surface occupied by the plurality of photovoltaic films (11) is between 30% and 90%, preferably between 40% and 80% and advantageously between 50% and 70%, and wherein the percentage of the main extension surface occupied by the plurality of transparent films (12) is between 10% and 70%, preferably between 20% and 60% and advantageously between 30% and 50%.

8. Shading screen (10) according to any one of the preceding claims, wherein each photovoltaic film of the plurality of photovoltaic films (11) has a thickness between 1 nm and 250 µm, preferably between 5 µm and 150 µm and advantageously between 10 µm and 100 µm.

9. Shading system comprising at least one shading screen (10) according to any one of the preceding claims, at least one support (13) configured to cooperate with said shading screen (10) and at least one actuation device (20) configured to alternately switch the shading screen (10) from the deployed configuration to the folded configuration.

10. Shading system intended to be arranged inside an agricultural greenhouse (40) according to the preceding claim, wherein, in deployed configuration, the shading screen (10) extends mainly in a horizontal plane, preferably above at least a part of a crop (41) located in an agricultural greenhouse (40) .

11. Shading system according to any one of the two preceding claims, the actuation device (20) comprises at least one articulated arm (22) configured to alternately pass the shading screen (10) from the deployed configuration to the folded configuration and from the folded configuration to the deployed configuration.

12. Shading system according to any one of the three preceding claims, the actuation device (20) comprises a motor (20) comprising a motor shaft (23) configured to move the shading screen (10) from the deployed configuration to the folded configuration by winding the shading screen (10) around the motor shaft (23) on itself and/or from the folded configuration to the deployed configuration by unwinding the shading screen (10) around the motor shaft (23).

13. Shading system according to any one of claims 9 to 12 comprising a control device (30) configured to control the actuation device (20) and wherein the control device (30) comprises at least one sensor (31) taken from at least: a brightness sensor, a temperature sensor, a humidity sensor, a pyrometer, an anemometer, a dendrometer, a rain gauge, a radiation sensor.

14. Agricultural greenhouse (40) comprising at least one system according to any one of claims 9 to 13.

15. Method for controlling the deployment and/or folding of a shading system according to any one of claims 9 to 13, the shading system being intended to be disposed inside an agricultural greenhouse (40) and comprising at least one device (30) controlling the actuation device (20), the method comprising at least the cycle of the following steps:
o Determining a parameter of controlling the actuation device (20) by the control device (30);
o Modification of the configuration of the shading screen (10) by the actuation device (20) controlled by the control device (30) according to the control parameter.
